# EUROPEAN PATENT SPECIFICATION

(11) **EP 0 957 736 B1**
(45) Date of publication and mention of the grant of the patent: **27.03.2002**
(21) Application number: 96925213.9
(22) Date of filing: 28.06.1996
(51) Int. Cl.: A47G 19/32, A47J 43/28

(54) **APPARATUS FOR AUTOMATIC FEEDING OUT OF STEWS, SALADS AND SIMILAR DISHES FROM LARGE COOKING VESSELS**
GERÄT FÜR DAS AUTOMATISCHE ABGEBEN VON SCHMORGERICHTEN, SALATEN, ODER ÄHNLICHEN GERICHTEN AUS GROSSEN SPEISEBEHÄLTERN
DISPOSITIF DE DEBIT AUTOMATIQUE DE RAGOUTS, SALADES ET PREPARATIONS CULINAIRES ANALOGUES DEPUIS DE GRANDS RECIPIENTS DE CUISSON

(30) Priority: 04.08.1995 SE 9502751
(43) Date of publication of application: 24.11.1999
(73) Proprietor: Janina Handelsbolag, 454 34 Fiskebäckskil (SE)
(72) Inventor: PERSSON, Göran, S-411 18 Göteborg (SE)
(74) Representative: Roth, Ernst Adolf Michael
(86) International application number: SE9600877
(87) International publication number: WO9705811

(56) References cited:
- EP-A- 0 499 596
- EP-A- 0 588 070
- US-A- 4 917 158

## Description

### FIELD OF THE INVENTION

The present invention refers to an apparatus for feeding out a paste like substance, e.g. a stew, a salad and similar dishes from a preparation vessel, comprising an outfeed tube which may be immersed into the vessel with one of its ends and in which is slidable housed within an in direction upwards and downwards by means of a drive means displaceable elevator, which at its upward going movement conveys substance through the outfeed tube.

### BACKGROUND OF THE INVENTION

EP-A-499596 shows an outfeed apparatus according to above, which is adapted for outfeed of such foodstuff that contain solid ingredients, e.g. stews and salads of different kinds, that do not endure an ungentle treatment without considerably loosing consistency.

It has been shown that this known apparatus is subjected to wear, when the end of the outfeed tube is immersed into a hot substance and the elevator piston is brought to move up and down between the lower, hot tube end and the upper cooler tube end. Deformations occur because of the variations in temperature, which deformations are the cause of said wear.

As a result of this, frictional resistance is also created which may be overcome, for example by installing powerful drive means for the elevator.

### THE TECHNICAL PROBLEM

One object of the present invention is therefore to provide an outfeed apparatus, which may work more efficiently than corresponding prior art apparatuses, without creation of reliability damaging wear.

### THE SOLUTION

By the design in accordance with the invention, the elevator may be driven up and down in a more efficient way, so that a larger amount of substance may be fed out under a reduced consumption of power, which leads to economical savings. By this simplified design of the apparatus, it will also be cheaper to manufacture.

### DESCRIPTION OF THE DRAWINGS

The invention will be described hereinafter with reference to embodiments that are shown in the enclosed drawings, wherein
- Fig. 1: is a side view of the lower part of an outfeed apparatus according to the invention, showing the outfeed tube in section along the line I-I in Fig. 4,
- Fig. 2: shows correspondingly a section along the line II-II in Fig. 4, wherein the elevator being submerged into a substance which is going to be fed out,
- Fig. 3: shows correspondingly as Fig. 2, the elevator during movement upward, i.e. while feeding out substance, and
- Fig. 4: is an end view of the outfeed apparatus according to the invention,

### DESCRIPTION OF EMBODIMENTS

In its position of use, the apparatus is located with the tube end 10 submerged into a substance which is going to be fed out from a not shown preparation vessel. The tube 10 is provided with a not shown, curved outfeed nozzle. In the vertical part of the tube 10, an elevator 11 is housed slidable, which may be driven up and down by means of a driving device which is located outside the preparation vessel. The driving device may for example be provided by a pneumatic piston cylinder.

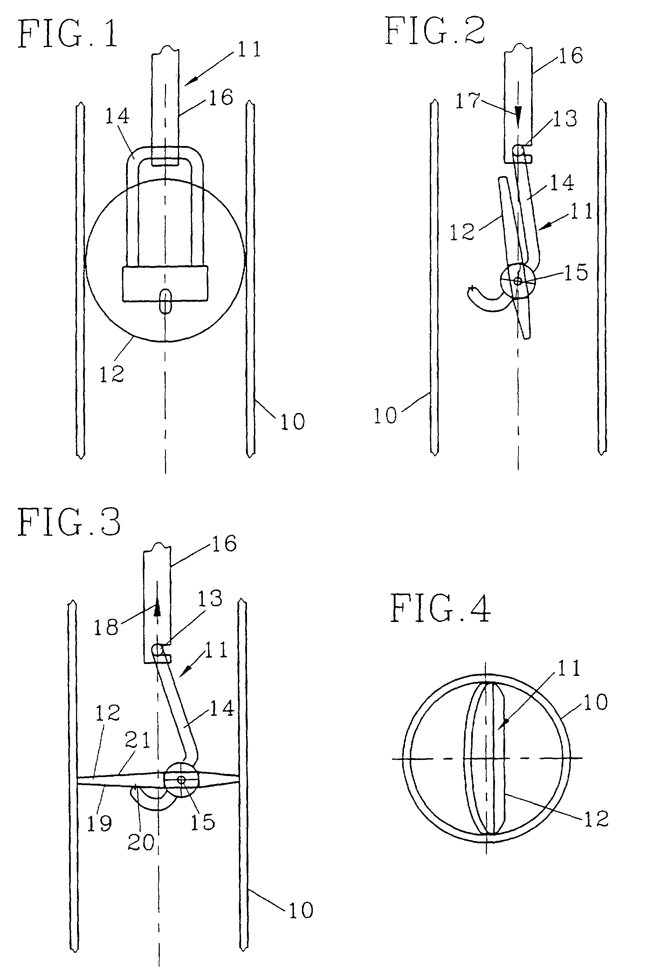

The elevator 11 comprises a disc 12, the circumference of which substantially corresponds to the inner section of the outfeed tube 10. The disc 12 is connected via a fulcrum 13, 14 and 15 to a drive shaft 16 which acts inside the outfeed tube. The fulcrum on one hand comprises a first pivot point 13 at the bottom end of the drive shaft 16, and on the other a yoke shaped hinge 14 which is eccentrically connected to the disc 12 via a second pivot point 15. Both the pivot points 13, 15 are provided with substantially parallel pivot shafts. Because of this design of the elevator, the design is considerably simplified in comparison with prior art which uses a piston with two pivoting valve flaps. Also, the elevator according to the invention generates considerably less resistance while being moved into a not shown substance according to Fig. 2, i.e. in the direction of the arrow 17.

When the elevator 11 is moved upwards in the direction of the arrow 18 in Fig. 3, the disc 12 tilts around the pivot point 15, until the bottom surface 19 of the disc in Fig. 3 is supported upon a stop face 20 which is formed by an upward bent end of the hinge 14. In this position, the disc 12 is in a plane which is substantially at right angle to the longitudinal axis of the tube and therefore blocks the entire section of the tube. This means that a substance which rests upon the upper side 21 of the disc 12 will be fed upwards, in accordance with prior art devices for the purpose. The pivoting of the disc 12 is enabled by the revolving of the arm 14 around the pivot point 13, so that the pivot point 15 may move across the longitudinal axis of the tube, from a point in Fig. 2 in line with the longitudinal axis of the tube, to a point eccentrically to the side of this longitudinal axis (see Fig. 3).

In a section right through the hinge of the second pivot point 15, the disc 12 is provided with a section which diverges from that edge which is located nearest the pivot point 15, in the direction towards this pivot point. In a section right through the other hinge of the pivot point 15, the disc is provided with a section which converges towards the edge which is located furthest away from the pivot point 15, in the direction away from this pivot point.

Because of this design of the 12, similar to an asymmetrically shaped discus, less resistance is created when the disc is moved down to its turning point at the bottom end of the outfeed tube 10. The design of the disc also means that it is easy to wash/sterilize.

The disc 12 is preferably produced from a wear resistant material having a low friction and coefficient of thermal expansion, e.g. acetal resin.

Naturally, the invention is not limited to the above described embodiment, instead more variants are conceivable within the scoop of the following claims. For example, the drive shaft 16 of the elevator 11 may be designed as a divided yoke having two out-turned pivot points being journalled in a fork shaped drive shaft 16.

## Claims

1. An apparatus for feeding out a paste like substance, e.g. a stew, a salad and similar dishes from a preparation vessel, comprising an outfeed tube (10) which may be immersed into the vessel with one of its ends and in which is slidable housed within an in direction upwards and downwards by means of a drive means displaceable elevator (11), which at its upward going movement conveys substance through the outfeed tube (10), **characterized in that** the elevator comprises a disc (12), the diameter of which substantially corresponds to the inner section of the outfeed tube (10), that the disc (12) is connected via a fulcrum (13, 14, 15) to a drive shaft (16) which acts inside the outfeed tube.

2. An apparatus according to claim 1,
**characterized in that** the fulcrum (13, 14, 15) on one hand comprises a first pivot point (13) at the drive shaft (16), and on the other a second pivot point (15) which is eccentrically connected to the disc (12).

3. An apparatus according to claim 2,
**characterized in that** both the pivot points (13, 15) are provided with substantially parallel pivot shafts.

4. An apparatus according to claim 3,
**characterized in that** the disc (12), in a section right through the hinge of the other pivot point (15), is provided with a section which diverges from that edge which is located nearest the pivot point (15), in the direction towards this pivot point.

5. An apparatus according to claim 4,
**characterized in that** the disc (12) in a section right through the other hinge of the pivot point (15), is provided with a section which converges towards the edge which is located furthest away from the pivot point (15), in the direction away from this pivot point.

## Patentansprüche

1. Vorrichtung zur Ausgabe eines pastenartigen Stoffes, wie zum Beispiel Eintopf, Salat und ähnlichen Gerichten, aus einem Zubereitungsgefäß, die ein Ausgaberohr (10) aufweist, das sich mit einem seiner Enden in das Gefäß einführen läßt und in dem ein mit Hilfe einer Antriebseinrichtung aufwärts und abwärts verschiebbarer Heber (11) untergebracht ist, der bei seiner Aufwärtsbewegung Stoff durch das Ausgaberohr (10) befördert, **dadurch gekennzeichnet, daß** der Heber eine Scheibe (12) aufweist, deren Durchmesser im wesentlichen dem Innenquerschnitt des Ausgaberohres (10) entspricht, und daß die Scheibe (12) über eine Hebelstütze (13, 14, 15) mit einer Antriebswelle (16) verbunden ist, die innerhalb des Ausgaberohres arbeitet.

2. Vorrichtung nach Anspruch 1,
**dadurch gekennzeichnet, daß** die Hebelstütze (13, 14, 15) einerseits eine erste Schwenkachse (13) an der Antriebswelle (16) und andererseits eine zweite Schwenkachse (15) aufweist, die exzentrisch mit der Scheibe (12) verbunden ist.

3. Vorrichtung nach Anspruch 2,
**dadurch gekennzeichnet, daß** an beiden Schwenkachsen (13, 15) im wesentlichen parallel angeordnete Drehwellen angeordnet sind.

4. Vorrichtung nach Anspruch 3,
**dadurch gekennzeichnet, daß** die Dicke der Scheibe (12) in einem Längsschnitt genau durch die Schwenkachse des zweiten Drehpunktes (15) von dem am nächsten zum Drehpunkt (15) gelegenen Rand in Richtung auf diesen Drehpunkt zunimmt.

5. Vorrichtung nach Anspruch 4,
**dadurch gekennzeichnet, daß** die Dicke der Scheibe (12) in einem Längsschnitt genau durch die Schwenkachse des zweiten Drehpunktes (15) in der Richtung von diesem Drehpunkt (15) zu dem am weitesten vom Drehpunkt (15) enffernten Rand abnimmt.

## Revendications

1. Dispositif destiné à vidanger une substance analogue à une pâte, par exemple un ragoût, une salade et des mets similaires à partir d'un récipient de préparation, comprenant un tube de vidange (10) qui peut être immergé par l'une de ses extrémités dans le récipient et dans lequel est logé pour coulissement à l'intérieur d'un élévateur mobile grâce à des moyens d'entraînement (11) dans une direction vers le haut et vers le bas, qui par son mouvement de déplacement vers le haut transporte la substance via le tube de vidange (10), **caractérisé en ce que** l'élévateur comprend un disque (12), dont le diamètre correspond sensiblement à la section interne du tube de vidange (10), et **en ce que** le disque (12) est relié par l'intermédiaire d'un levier (13, 14, 15) à un arbre d'entraînement (16) qui fonctionne à l'intérieur du tube de vidange.

2. Dispositif selon la revendication 1, **caractérisé en ce que** le levier (13,14,15) comprend d'une part un premier point formant pivot (13) au niveau de l'arbre d'entraînement (16), et d'autre part un deuxième point formant pivot (15) qui est relié de manière excentrique au disque (12).

3. Dispositif selon la revendication 2, **caractérisé en ce que** les deux points formant pivot (13, 15) sont prévus avec des arbres formant pivot sensiblement parallèles.

4. Dispositif selon la revendication 3, **caractérisé en ce que** le disque (12), dans une section perpendiculaire à la charnière de l'autre point formant pivot (15), est formé avec une section qui diverge à partir du rebord qui est disposé le plus près du point formant pivot (15), orienté en direction de ce point formant pivot.

5. Dispositif selon la revendication 4, **caractérisé en ce que** les disques (12) dans une section perpendiculaire à l'autre charnière du point formant pivot (15), est formé avec une section qui converge en direction du rebord qui est disposé le plus loin écarté à partir du point formant pivot (15), dans la direction éloignée à partir de ce point formant pivot.
